# EUROPÄISCHE PATENTSCHRIFT

(11) **EP 1 304 315 B1**
(45) Veröffentlichungstag und Bekanntmachung des Hinweises auf die Patenterteilung: **21.04.2004**
(21) Anmeldenummer: 02022247.7
(22) Anmeldetag: 02.10.2002
(51) Int. Cl.: C04B 30/02, C01B 33/18, H05B 3/74

(54) **Mikroporöser Wärmedämmformkörper enthaltend Lichtbogenkieselsäure**
Microporous thermal insulation body containing electric arc silicic acid
Corps thermo-isolant microporeux contenant de l'acide silicique à l'arc électrique

(30) Priorität: 18.10.2001 DE 10151479
(43) Veröffentlichungstag der Anmeldung: 23.04.2003
(73) Patentinhaber: Wacker-Chemie GmbH, 81737 München (DE)
(72) Erfinder: Eyhorn, Thomas, 87452 Altusried (DE); Rell, Andreas, 87448 Waltenhofen (DE)
(74) Vertreter: Potten, Holger

(56) Entgegenhaltungen:
- EP-A- 1 236 949
- WO-A-01/09057
- US-A- 5 556 689
- US-B1- 6 191 122

## Beschreibung

Die Erfindung betrifft einen mikroporösen Wärmedämmformkörper, bestehend aus verpreßtem Wärmedämmmaterial, enthaltend feinteilige Metalloxide in Form von pyrogener Kieselsäure und Lichtbogenkieselsäure sowie Trübungsmittel, Fasern und Zuschlagstoffe.

Derartige mikroporöse Wärmedämmformkörper sind bekannt und beispielsweise in US-A 4,985,163, beschrieben.

Vorzugsweise in derartigen mikroporösen Wärmedämmformkörpern verwendete, feinteilige Metalloxide sind pyrogen erzeugte Kieselsäuren einschließlich Lichtbogenkieselsäuren, Fällungskieselsäuren oder Siliciumdioxidaerogele sowie analog hergestellte Aluminiumoxide sowie deren Mischung. Zur Erzielung guter Wärmeisoliereigenschaften besitzen diese feinteiligen Oxide sehr hohe spezifische Oberflächen, die vorzugsweise im Bereich von 50 - 700 m²/g (nach BET gemessen) liegen. Bedingt durch diese großen Oberflächen ist das Adsorptionsvermögen dieser Oxide gegenüber polaren Substanzen sehr stark ausgeprägt. Bekannterweise wirken sie daher als sehr
effektive Trockenmittel und nehmen in natürlicher Atmosphäre begierig Wasser auf. Gleiches Verhalten zeigen dementsprechend auch die daraus hergestellten mikroporösen Wärmedämmformkörper. In der Praxis läßt sich daher eine Feuchtigkeitsaufnahme der mikroporösen Wärmedämmformkörper während der Lagerung und des Gebrauchs nicht verhindern. Werden nun diese mikroporösen Wärmedämmformkörper im praktischen Einsatz innerhalb kurzer Zeit einer hohen thermischen Energie ausgesetzt, so entsteht explosionsartig Wasserdampf, der die Struktur des Wärmedämmformkörpers zerstört. Dieser Effekt tritt beispielsweise bei mikroporösen Wärmedämmformkörpern auf, die als Wärmeisolierung in Strahlungsheizeinheiten für Keramikkochfelder verwendet werden, falls diese Strahlungsheizeinheiten mittels der üblichen Widerstandsheizelemente in üblichen Intervallen von vorzugsweise 1 bis 8 Sekunden zum Glühen gebracht werden.

Aus EP 618399 (entspricht US 5556689) ist bekannt, dass die aufgenommene Feuchtigkeit handelsüblicher wärmedämmender Formteile mittels definierter Kanalporen als Wasserdampf abgeführt werden kann, ohne daß eine Zerstörung des Formkörpers stattfindet.

WO 01/09057 (Anmelder Ceramaspeed) beschreibt Wärmedämmformkörper mit einem Anteil von 10 - 99,5 Gew. % Lichtbogenkieselsäure und einem Kohlenstoffgehalt von 0,5 - 6 Gew. %. Bei einem Temperaturbehandlungsschritt größer 400°C erfolgt eine Härtung des Formteils. Auf S.2, Zeile 10 - 14, dieser Anmeldung ist ausgeführt, daß bei vergleichbarer Dichte die gepressten Teile mit Lichtbogenkieselsäure weicher sind als Teile ohne Lichtbogenkieselsäure. Dies wird durch die Härtung auf Grund des C - Gehaltes kompensiert.

Aufgabe der Erfindung ist es, einen Wärmedämmformkörper bestehend aus verpreßtem Wärmedämmmaterial enthaltend feinteilige Metalloxide in Form von pyrogener Kieselsäure und Lichtbogenkieselsäure sowie ein Trübungsmittel zur Verfügung zu stellen, welcher unter Beibehaltung der guten wärmedämmenden, mechanischen und elektrisch isolierenden Eigenschaften bekannter Wärmedämmformkörper eine deutlich geringere Wasseraufnahme aufweist.

Die Aufgabe wird gelöst durch einen Wärmedämmformkörper einer Dichte von 150 - 500 kg/m³, bestehend aus Wärmedämmmaterial, enthaltend 5 - 75 Gew.% pyrogener Kieselsäure (HDK), 5-50 Gew.% Lichtbogenkieselsäure, 5- 50 Gew.% Trübungsmittel dadurch gekennzeichnet, daß die Lichtbogenkieselsäure eine Schüttdichte < 200 kg/m³, einen Kohlenstoffgehalt < 0,1 Gew.%, einen Alkalioxidgehalt < 0,2 Gew.%, einen Erdalkalioxidgehalt < 0,3 Gew.%, einen SO₃-Gehalt < 0,05 Gew.% und eine spez. Oberfläche > 30 m²/g besitzt.

Vorzugsweise besitzt die Lichtbogenkieselsäure eine Schüttdichte von 70 kg/m³ bis 190 kg/m³, einen Kohlenstoffgehalt von 0 bis 0,05 Gew.%, einen Alkalioxidgehalt von 0,02 bis 0,18 Gew.%, einen Erdalkalioxidgehalt von 0,05 bis < 0,3 Gew.%, einen SO₃-Gehalt von 0 bis < 0,05 Gew.% und eine spez. Oberfläche von > 30 bis 48 m²/g.

Vorzugsweise enthält der erfindungsgemäße Wärmedämmformkörper noch 0 - 10 Gew.% anorganisches Fasermaterial, 0 - 5 Gew.% organisches Fasermaterial, 0 - 30 Gew.% Zusatzstoffe und 0 - 2 Gew.% anorganische Bindemittel.

Vorzugsweise besteht das Wärmedämmmaterial aus den genannten Materialien.

Besonders bevorzugt hat der Wärmedämmformkörper eine Dichte von 200 - 450 kg/m³ und besteht aus 10 - 70 Gew.% pyrogener Kieselsäure, 10-40 Gew.% Lichtbogenkieselsäure, 10- 45 Gew.% Trübungsmittel, 1 - 7 Gew.% anorganischem Fasermaterial, 0 - 4 Gew.% organischem Fasermaterial, 0 - 20 Gew.% Zusatzstoffen und 0 - 1 Gew.% anorganischem Bindemittel.

Insbesondere bevorzugt hat der Wärmedämmformkörper eine Dichte von 250 - 400 kg/m³ und besteht aus 15 - 60 Gew.% pyrogener Kieselsäure, 15-30 Gew.% Lichtbogenkieselsäure, 20- 40 Gew.% Trübungsmittel, 2 - 5 Gew.% anorganischem Fasermaterial, 0 - 3 Gew.% organischem Fasermaterial, 5 - 15 Gew.% Zusatzstoffen und 0 - 0,7 Gew.% anorganischem Bindemittel.

Übliche Lichtbogenkieselsäuren z.B. von Elkem Norwegen Microsilica 983 und 971 von Elkem (4675 Kristiansand, Norwegen), oder Supersil von Zirkon - Mineral GmbH (Erftstadt), oder Microfume A von Pechiney (Düsseldorf) und analog hergestellte Al₂O₃ reiche Produkte wie "RW - Aloxil" von RW Silicium GmbH (Pocking) haben einen C Gehalt > 0,6 Gew.% und eine Schüttdichte von größer 300 kg/m³ (typischerweise > 400 kg/m³) (z. B. WO 01/09057 S.2 Zeile 32 ff).

Überraschend zeigte sich, daß ein Formkörper, der eine chemisch sehr reine Lichtbogenkieselsäure mit einer Schüttdichte von < 200 kg/m³ enthält, eine verringerte Neigung zur Wasseraufnahme zeigt. Durch die Verwendung dieser Lichtbogenkieselsäure, welche teilweise die pyrogene Kieselsäure im üblichen Wärmedämmformkörper ersetzt, können mittels eines üblichen Herstellungsverfahrens erfindungsgemäße Wärmedämmformkörper hergestellt werden. Diese weisen keine höhere Dichte als übliche Wärmedämmformkörper auf und erfüllen die hohen Anforderungen an die thermischen Eigenschaften von Wärmedämmformkörpern. Auch die von Wärmedämmformkörpern geforderten mechanischen Eigenschaften und Hochtemperatureigenschaften werden erreicht. Obwohl bis zu 50 Gew. % der üblicherweise eingesetzten pyrogenen Kieselsäure durch die ausgewählte Lichtbogenkieselsäure mit den genannten Eigenschaften substituiert wurde, wird bei dem erfindungsgemäßen Wärmedämmformkörper kein Unterschied zu üblichen Wärmedämmformkörpern gefunden, nur die Wasseraufnahme des Materials ist verringert.

Üblicherweise haben die erfindungsgemäßen Wärmedämmformkörper folgende Kenngrößen:
Biegefestigkeit > 0,15 N/mm²
Druckfestigkeit > 1,0 N/mm²
Wärmeleitzahl < 0,025 W/mK
Elektrischer Widerstand > 2000 MΩ

Der Einsatz von Lichtbogenkieselsäure zur Herstellung von Wärmedämmformkörpern ist im Stand der Technik zwar bereits bekannt, so wird die Verwendung von Lichtbogenkieselsäure neben Fällungskieselsäuren etc. in der Regel als geeignetes Material genannt, die Lichtbogenkieselsäure wird allerdings nie bevorzugt verwendet. Lichtbogenkieselsäuren sind generell recht verunreinigt mit Alkalien, Erdalkalien und Ruß / Kohlenstoff. Sie weisen zudem üblicherweise recht hohe Schüttdichten auf. Die Verwendung dieser Lichtbogenkieselsäure führt nicht zu verbesserten Eigenschaften bei den hergestellten Formkörpern. Die folgende Tabelle vergleicht eine übliche Lichtbogenkieselsäure mit der im erfindungsgemäßen Formkörper vorhandenen Lichtbogenkieselsäure.

| | Standard | Auswahl (NDTC) |
|---|---|---|
| Schüttdichte kg/m³ | > 300 | < 200 |
| Kohlenstoff Gew% | 0,5 - 6,0 | < 0,1 |
| Alkalioxide Gew.% | > 0,2 | < 0,2 |
| Erdalkalioxide Gew.% | > 0,4 | < 0,3 |
| SO₃ Gew.% | > 0,1 | < 0,05 |
| Spez. Oberfläche m²/g | < 25 | > 30 |

Die Vorteile, die durch den Einsatz der ausgewählten Lichtbogenkieselsäure erfindungsgemäß erreicht werden, finden sich im Stand der Technik nicht und werden durch ihn auch nicht nahe gelegt.

Zur Herstellung eines erfindungsgemäßen Formkörpers wird vorzugsweise pyrogen erzeugte Kieselsäure mit einer spezifischen Oberfläche nach BET von 50 - 700 m²/g, besonders bevorzugt von 70 - 400m²/g, verwendet. Eine solche pyrogen erzeugte Kieselsäure ist beispielsweise unter der Bezeichnung HDK® S130 - T30 bei der Fa. Wacker-Chemie GmbH, München, erhältlich.

Beispiele für Trübungsmittel sind Ilmenit, Rutil, Titandioxid, Siliciumcarbid, Eisenmischoxide, Eisen-II-Eisen-III-Mischoxid, Chromdioxid, Zirkonoxid, Mangandioxid, Eisenoxid, Siliciumdioxid, Aluminiumoxid und Zirkonsilikat, sowie deren Mischungen. Vorzugsweise werden Siliciumcarbid, Rutil, Ilmenit und Zirkonsilikat verwendet. Besonders bevorzugt wird Siliciumcarbid verwendet. Die Trübungsmittel weisen vorteilhafterweise ein Absorptionsmaximum im Infrarotbereich zwischen 1,5 und 10 µm auf.

Beispiele für organische Fasermaterialien sind Viskose und Zellstoff.

Beispiele für anorganische Fasermaterialien sind keramische Fasern, lösliche keramische Fasern, bevorzugt Textilglasfasern mit einem Durchmesser > 5µm wie Asilfaser, Belcotexfaser, Silicafaser, E- , R, - S2,- oder ähnliche Fasern.

Beispiele für Zusatzstoffe sind Glimmer, Perlit, Vermiculit, Flugaschen, alkaliarme Fällungskieselsäuren, Al₂O₃, pyrogen erzeugtes Aluminiumoxid, Siliciumoxidaerogele.

Als anorganische Bindemittel können alle Bindemittel, deren Einsatz in mikroporösen Wärmedämmformkörpern bekannt ist, verwendet werden. Beispiele solcher Bindemittel sind in der US-A 4,985,163 offenbart, auf die in diesem Zusammenhang ausdrücklich verwiesen wird. Vorzugsweise werden Boride des Aluminiums, des Titans, des Zirkons, des Calciums, Silicide, wie Calciumsilicid und Calcium-Aluminium-Silicid, insbesondere Borcarbid eingesetzt. Beispiele für weitere Bestandteile sind basische Oxide, insbesondere Magnesiumoxid, Calciumoxid oder Bariumoxid.

Die Herstellung des erfindungsgemäßen Wärmedämmformkörpers erfolgt mittels eines zur Herstellung solcher Formkörper üblichen Verfahrens. Das Verfahren umfaßt vorzugsweise folgende Verfahrensschritte:
I. Verpressen der Wärmedämmischung auf Basis der genannten Komponenten in die gewünschte Form bei Drücken von 8 bis 20 bar, wobei die Dicke der resultierenden Formen vorzugsweise 10 bis 35 mm, insbesondere 10 bis 15 mm, beträgt;
II. Gegebenenfalls Erhitzen des verpreßten Körpers bei Temperaturen von 500 bis 980°C (Härtungsprozeß).

Die erfindungsgemäßen Wärmedämmformkörper finden Verwendung in allen Bereichen, in denen auch bisher mikroporöse Wärmedämmformkörper eingesetzt wurden, wie beispielsweise als wärmedämmendes Formteil in Strahlungsheizeinheiten zur Beheizung einer Platte, insbesondere einer Glaskeramikplatte, in Strahlungsbeheizungen von Öfen, insbesondere Backöfen, in Heizstrahlern oder in Halogenstrahlern oder anderen Anwendungen bei Temperaturen bis 1200°C welche mit hohen Aufheizraten (> 100K/min) betrieben werden.

Die folgenden Beispiele dienen der weiteren Erläuterung der Erfindung.

### Vergleichsbeispiel

Eine Wärmedämmmischung der Zusammensetzung
- 55 Gew.%: pyrogen erzeugte Kieselsäure (käuflich erhältlich unter der Bezeichnung HDK® N25 bei der Fa. Wacker-Chemie, München)
- 41,5 Gew. %: Zirkonsilicat
- 3 Gew. %: Textilglasfaser (käuflich erhältlich unter der Bezeichnung Asilfaser 6mm bei der Fa. Asglawo in Freiberg
- 0,5 Gew%: Borcarbid
wurde zu einem Formteil mit 198 mm Durchmesser, 13 mm Dicke und einer Dichte von 320 kg/m³ gepresst und eine Stunde bei 800°C im Ofen behandelt.
Der erhaltene Formkörper wurde bei 30°C in 93% rel. Luftfeuchtigkeit 180 Stunden gelagert. Die Wasseraufnahme betrug 19% bezogen auf das Ausgangsgewicht des Formkörpers.

### Beispiel 1

Eine Wärmedämmmischung der Zusammensetzung
- 35 Gew.%: pyrogen erzeugte Kieselsäure (käuflich erhältlich unter der Bezeichnung HDK® N25 bei der Fa. Wacker-Chemie, München)
- 20 Gew.%: Lichtbogenkieselsäure (käuflich erhältlich unter der Bezeichnung Microfume NDTC bei der Fa. Pechiney, Düsseldorf).
- 5 Gew.%: Al₂O₃
- 37,5 Gew.%: Zirkonsilicat
- 2 Gew.%: Textilglasfaser (käuflich erhältlich unter der Bezeichnung Asilfaser 6mm bei der Fa. Asglawo, Freiberg.)
- 0,5 Gew.%: Borcarbid
wurde analog dem Vergleichsbeispiel zu einem Formkörper mit einer Dichte 320 kg/m³ verarbeitet und im Klimaschrank gelagert. Die Wasseraufnahme betrug 9 Gew.%.

### Beispiel 2

Eine Wärmedämmischung der Zusammensetzung
- 30 Gew.%: pyrogen erzeugte Kieselsäure (käuflich erhältlich unter der Bezeichnung HDK® S 13 bei der Fa. Wacker-Chemie, München)
- 25 Gew.: Lichtbogenkieselsäure (käuflich erhältlich unter der Bezeichnung Microfume NDTC bei der Fa. Pechiney, Düsseldorf)
- 30,5 Gew%: Siliciumcarbid erhältlich unter der Bezeichnung MAW bei der Fa. Wacker-Chemie, München
- 3,0 Gew.%: Textilglasfaser (käuflich erhältlich unter der Bezeichnung Belcotex bei der Fa. Belchem)
- 10 Gew. %: Al₂O₃
- 1,5 Gew.%: Zellstoffasern (käuflich erhältlich unter der Bezeichnung Arbocell FIF 400 bei J.Rettenmaier GmbH in Ellwangen)
wurde analog dem Vergleichsbeispiel zu einem Formkörper mit einer Dichte 320 kg/m³ verarbeitet und im Klimaschrank gelagert. Die Wasseraufnahme betrug 5 Gew.%.

## Patentansprüche

1. Wärmedämmformkörper einer Dichte von 150 - 500 kg/m³, bestehend aus einem Wärmedämmmaterial, enthaltend 5 - 75 Gew.% pyrogene Kieselsäure, 5-50 Gew.% Lichtbogenkieselsäure, 5- 50 Gew.% Trübungsmittel **dadurch gekennzeichnet, daß** die Lichtbogenkieselsäure eine Schüttdichte < 200 kg/m³, einen Kohlenstoffgehalt < 0,1 Gew.%, einen Alkalioxidgehalt < 0,2 Gew.%, einen Erdalkalioxidgehalt < 0,3 Gew.%, einen SO₃-Gehalt < 0,05 Gew.% und eine spez. Oberfläche > 30 m²/g besitzt.

2. Wärmedämmformkörper nach Anspruch 1, **dadurch gekennzeichnet, daß** die Lichtbogenkieselsäure eine Schüttdichte von 70 kg/m³ bis 190 kg/m³, einen Kohlenstoffgehalt von 0 bis 0,05 Gew.%, einen Alkalioxidgehalt von 0,02 bis 0,18 Gew.%, einen Erdalkalioxidgehalt von 0,05 bis < 0,3 Gew.%, einen SO₃-Gehalt von 0 bis < 0,05 Gew.% und eine spez. Oberfläche von > 30 bis 48 m²/g besitzt.

3. Verfahren zur Herstellung eines Wärmedämmformkörpers gemäß Anspruch 1 oder 2, **dadurch gekennzeichnet, daß** das Verfahren folgende Verfahrensschritte umfaßt:
Verpressen der Wärmedämmischung auf Basis der genannten Komponenten in die gewünschte Form bei Drücken von 8 bis 20 bar, wobei die Dicke der resultierenden Formen vorzugsweise 10 bis 35 mm, insbesondere 10 bis 15 mm, beträgt;
Gegebenenfalls Erhitzen des verpreßten Körpers bei Temperaturen von 500 bis 980°C

4. Verwendung eines Wärmedämmformkörpers gemäß Anspruch 1 oder 2, als wärmedämmendes Formteil in Strahlungsheizeinheiten zur Beheizung einer Platte, in Strahlungsbeheizungen von Öfen, in Heizstrahlern oder in Halogenstrahlern oder anderen Anwendungen bei Temperaturen bis 1200°C welche mit hohen Aufheizraten betrieben werden.

## Claims

1. Thermal insulation moulding having a density of 150 - 500 kg/m³, comprising a thermal insulation material, containing 5 - 75% by weight of pyrogenic silica, 5 - 50% by weight of electric-arc silica, 5 - 50% by weight of opacifier, **characterized in that** the electric-arc silica has a bulk density of < 200 kg/m³, a carbon content of < 0.1% by weight, an alkali metal oxide content of < 0.2% by weight, an alkaline-earth metal oxide content of < 0.3% by weight, an SO₃ content of < 0.05% by weight and a specific surface area of > 30 m²/g.

2. Thermal insulation moulding according to Claim 1, **characterized in that** the electric-arc silica has a bulk density of 70 kg/m³ to 190 kg/m³, a carbon content of 0 to 0.05% by weight, an alkali metal oxide content of 0.02 to 0.18% by weight, an alkaline-earth metal oxide content of 0.05 to < 0.3% by weight, an SO₃ content of 0 to < 0.05% by weight and a specific surface area of > 30 to 48 m²/g.

3. Process for producing a thermal insulation moulding according to Claim 1 or 2, **characterized in that** the process comprises the following process steps:
compressing the thermal insulation mixture based on the components listed into the desired shape at pressures of 8 to 20 bar, the thickness of the resulting shapes preferably being 10 to 35 mm, in particular 10 to 15 mm;
if appropriate, heating the compressed body at temperatures of 500 to 980°C.

4. Use of a thermal insulation moulding according to Claim 1 or 2 as a thermally insulating shaped part in radiation heating units for heating a plate, in radiation heaters for furnaces or ovens, in heating radiators or in halogen radiators or other applications at temperatures up to 1200°C which are operated with high heat-up rates.

## Revendications

1. Corps façonné thermo-isolant présentant une densité de 150 - 500 kg/m³, constitué d'un matériau thermo-isolant contenant 5 à 75% en poids de silice pyrogène, 5 à 50% en poids de silice produite à l'arc électrique, 5 à 50% en poids d'opacifiant, **caractérisé en ce que** la silice produite à l'arc électrique présente une densité apparente < 200 kg/m³, une teneur en carbone < 0,1% en poids, une teneur en oxyde de métal alcalin < 0,2% en poids, une teneur en oxyde de métal alcalino-terreux < 0,3% en poids, une teneur en SO₃ < 0,05% en poids et une surface spécifique > 30 m²/g.

2. Corps façonné thermo-isolant selon la revendication 1, **caractérisé en ce que** la silice produite à l'arc électrique présente une densité apparente de 70 kg/m³ à 190 kg/m³, une teneur en carbone de 0 à 0,05% en poids, une teneur en oxyde de métal alcalin de 0,02 à 0,18% en poids, une teneur en oxyde de métal alcalino-terreux de 0,05 à < 0,3% en poids, une teneur en SO₃ de 0 à < 0,05% en poids et une surface spécifique > 30 jusqu'à 48 m²/g.

3. Procédé pour la fabrication d'un corps façonné thermo-isolant selon la revendication 1 ou 2, **caractérisé en ce que** le procédé présente les étapes de procédé suivantes :
compression du mélange thermo-isolant à base des composants mentionnés dans la forme souhaitée à des pressions de 8 à 20 bars, l'épaisseur des formes obtenues étant de préférence de 10 à 35 mm, en particulier de 10 à 15 mm ;
le cas échéant chauffage du corps comprimé à des températures de 500 à 980°C

4. Utilisation d'un corps façonné thermo-isolant selon la revendication 1 ou 2 comme pièce façonnée thermo-isolante dans des unités de chauffage par radiation pour le chauffage d'une plaque, dans des chauffages par radiation de fours, dans des radiateurs ou dans des radiateurs à halogène ou d'autres utilisations à des températures jusqu'à 1200°C, qui sont opérés avec des vitesses de chauffage élevées.
